# EUROPEAN PATENT APPLICATION

(11) **EP 4 425 374 A1**
(43) Date of publication of application: **04.09.2024**
(21) Application number: 23159681.8
(22) Date of filing: 02.03.2023
(51) Int. Cl.: G06K 19/077

(54) **RFID TAG FOR A TIRE HAVING A DURABLE ANTENNA**

(71) Applicant: Kordsa Teknik Tekstil Anonim Sirketi, 41310 Izmit/Kocaeli (TR); SES RFID Solutions GmbH, 40489 Düsseldorf (DE)
(72) Inventor: Yilmaz, Mehmet Ilker, 41310 Kocaeli (TR); Gokdemir, Hatice, 41310 Kocaeli (TR); Kazma, Coskun, 41310 Kocaeli (TR); Onen, Ezgi Taman, 41310 Kocaeli (TR); Sen, Mustafa Yasin, 41310 Kocaeli (TR); Cheng Lee, Yu, 40489 Düsseldorf (DE); Scattergood, Martin, 40489 Duesseldorf (DE)
(74) Representative: Atalay, Baris

(57) **Abstract**

The present invention relates to an electrical device having a flexible antenna structure for mounting onto and into tires. Said antenna coupling structure comprises a conductive yarn comprising a lightweight, flexible, and durable core textile reinforcement layer with a carbon nanotube coating. Said antenna coupling is treated with an appropriate adhesive coating easy mounting onto and into a tire. The present invention provides an improvement on the art by providing an antenna coupling structure for integrating into an electronic device to improve signal strength, durability, and fatigue performance during the manufacturing of tires.

## Description

### Technical Field of the Present Invention

The present invention relates to an electrical device having a flexible antenna structure for mounting onto and into tires. More specifically, the present invention relates to an RFID tag having flexible conductive yarn as an antenna and a tire comprising such a RFID tag.

### Background of the Present Invention

It is known that incorporating electrical devices into tire structures has many advantages, such as tracking the tire during manufacture, transport and storing operations, as well as measuring physical parameters, such as temperature and pressure. Different types of electrical devices are used in the art for these purposes, with radio frequency communication between the tire and an external monitoring or interrogating device being the most common. Such communication systems often include a radio-frequency identification (RFID) tag, and a reader that communicates with the RFID tag. The RFID tag includes an antenna and an RFID chip. Thus, information from the reader is received through the antenna and stored in an RFID chip, and the information stored in the RFID chip is transmitted to the reader through the antenna. RFID devices may be read-only, write-only, or read-and-write devices.

RFID tags and other electrical devices may be mounted onto or into a tire in a tire mountable apparatus. One of the problems associated with RFID tags is how to position and configure the antenna such that the data in the device are accurately transmitted to the information gathering device outside of the tire. The issues related to the use of RFID tags in tires are: (i) positioning the antenna as close to the outside of the tire as possible so that transmission efficiency is improved, (ii) positioning the antenna away from the metal reinforcing cords that interfere with the signal propagation, (iii) providing a device that can withstand the cyclic stresses in the operating tire, (iv) mounting the device onto and into the tire without overhandling and damaging it, and (v) ensuring the adhesion between the antenna, typically a metallic element, to the tire rubber material to secure it in in the correct position for optimum signal transfer and data reading.

Examples of RFID tags for tires found in the state of the art are given below.

US 7,102,499 discloses an electronic communication device for a tire having a radio device and an antenna intended to be attached to or embedded in a tire. The antenna is spirally or helically shaped to absorb tensile and bending stress applied by the tire. The antenna body may be a wire formed of spring steel, brass or zinc coated spring steel, or spring brass. A coating of insulating material coats the radio device and antenna for mounting on or in, and operation in, a tire structure.

US 9,490,531 discloses an antenna for an electronic device in a tire including a core for integrating into a rubber compound for a tire. The antenna further includes an electromagnetic-signal conduction layer, which is made of copper and coats the core, and a chemical isolation layer, which coats the conduction layer and is intended to chemically isolate the rubber compound from an object coated by the isolation layer.

Carbon nanotubes (CNTs) are known to show little change in conductivity in temperature ranges from 20°C to 80°C. Further, CNT coated textiles show almost no change in conductivity under repetitive bending of the fabric, indicating that the nanotube network is resistive to mechanical distortions (Hecht, David S., Liangbing Hu, and George Grüner. "Electronic properties of carbon nanotube/fabric composites." Current Applied Physics 7.1 (2007): 60-63). This makes CNTs advantageous to use in electrical devices that are under considerable mechanical stress.

Shim, et al. discloses conductive SWNT-modified cotton yarns for wearable electronics and smart textiles (Shim, Bong Sup, et al. "Smart electronic yarns and wearable fabrics for human biomonitoring made by carbon nanotube coating with polyelectrolytes." Nano letters 8.12 (2008): 4151-4157). Xiang, et al. discloses conductive carbon nanotube-coated Kevlar fibers fabricated through layer-by-layer spray coating (Xiang, Changsheng, et al. "Carbon nanotube and graphene nanoribbon-coated conductive kevlar fibers." ACS applied materials & interfaces 4.1 (2012): 131-136). Fugetsu, et al. discloses carbon nanotube-based dyestuffs prepared by dispersing aggregates of multiwalled carbon nanotubes in water using a blend of zwitterionic surfactants with anionic surfactants. Using a dye-printing approach, the carbon nanotubes were directly applied to polyester multifilament yarns to form an electrically conductive layer over each filament of the multifilament yarn in order to obtain yarns having electrical resistivity ranging from 10³ to 10⁹ ohm/cm (Fugetsu, Bunshi, et al. "The production of soft, durable, and electrically conductive polyester multifilament yarns by dye-printing them with carbon nanotubes." Carbon 47.2 (2009): 527-530).

The RFID tag must function throughout the entirety of the working life of the tire. In the prior art, the main technical problem is reduced durability due to the use of soldered joints on the tag design. In order to solve this problem, US 10,515,298 discloses an RFID transponder for contactless communication having a chip and an antenna connected together and integrated into a plastic package. The plastic package forms a coil core on its outer surface, on which a booster antenna having at least one coil winding is arranged. The RFID transponder can be exposed to high mechanical stress and has improved sensitivity and reading range performance due to the connection of a booster antenna.

The present invention provides an improvement on the art by providing an antenna coupling structure for integrating into an electronic device to improve signal strength, durability, and fatigue performance during manufacturing tires. Said antenna coupling structure comprises a conductive yarn comprising a lightweight, flexible, and durable core textile reinforcement layer with a carbon nanotube coating. Said conductive yarn has an increased RSSI signal due to its low electrical resistance without requiring use of metals. Said antenna coupling is treated with an appropriate adhesive covering to be easily mountable onto a tire. By offering a ready-to-use tag that can be embedded within the tire without further coating or processing, the electrical device of the present invention streamlines the operating procedure for tire manufacturing of RFID tag embedded tires. Additionally, the installation of the electrical device no longer involves rubber patching or layering according to the present invention.

### Brief Description of the Technical Drawings

Accompanying drawings are given solely for the purpose of exemplifying an electrical device, whose advantages over prior art were outlined above and will be explained in brief hereinafter.

The drawings are not meant to delimit the scope of protection as identified in the Claims, nor should they be referred to alone in an effort to interpret the scope identified in said Claims without recourse to the technical disclosure in the description of the present invention.
Figure 1 demonstrates a schematic view of an exemplary electrical device with an antenna.
Figure 2 demonstrates a schematic view of a conductive yarn.

### Detailed Description of the Present Invention

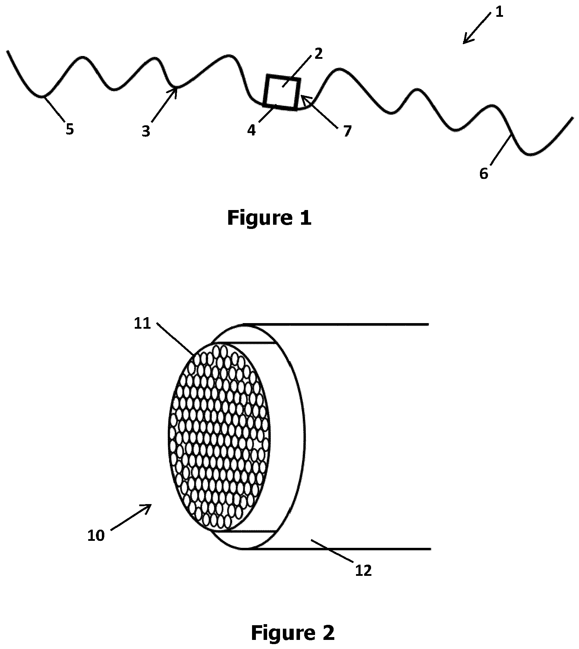

Figure 1 illustrates an exemplary electrical device (1). Said electrical device (1) can be an identification or tracking device, such as one that may be used in manufacturing, distribution, and sales activities, or a monitoring device for measuring temperature, pressure, or other physical parameters in an operating tire. In a preferred embodiment, said electrical device (1) is an RFID transponder comprising an RFID chip and an antenna for wirelessly communicating with external equipment, such as an RFID reader.

In one embodiment, said electrical device (1) comprises a package (7) comprising a chip (not depicted), and a first antenna (not depicted) which is connected to the chip for contactless communication. Said package (7) accommodates these transponder components as integrated components and may be able to accommodate larger microchips and larger coils for increased functional ranges. Said package (7) forms a bobbin (2) on its outer surface. An antenna coupling (3) having at least one coil winding (4) is arranged on the bobbin (2), wherein the coil winding (4) completely surrounds the integrated first antenna of the chip in order to form a backscatter propagation coupling. The two ends (5 and 6) of the coil winding (4) form antenna wires of a dipole antenna for the UHF range. Said package (7) may be made from an insulating material such as plastic or ceramic in order to mechanically protect and electrically insulate said chip and antenna. However, the skilled person can appreciate that the antenna coupling (3) of the invention can be used with any electrical device (1) comprising a chip and a first antenna.

Preferably, the first antenna is a flat coil having a winding plane that can be taken for aligning the antenna coupling (3) in order to form an optimal electromagnetic coupling between the first antenna and the antenna coupling (3). A coil-shaped spring antenna, helical antenna, plate-shaped antenna, and various types of rod-shaped antennas can be used as the antenna coupling (3). In a preferred embodiment of the invention, said antenna coupling (3) is a helical antenna.

Said antenna coupling (3) is made from a conductive yarn (10) comprising a core textile reinforcement layer (11) with a carbon nanotube coating (12) as illustrated in Figure 2. Said conductive yarn (10) being an essentially textile material ensures that it is lightweight and flexible, which makes it suitable for use as an antenna embedded in deformable objects, such as tires.

Said core textile reinforcement layer (11) comprises at least one reinforcement fiber. Said reinforcement fibers are chosen from among a group containing synthetic or biobased fibers. In a preferred embodiment of the invention, said reinforcement fibers are chosen from a group containing cotton, polyester (HMLS), UHMWPE (ultra-high molecular weight polyethylene), polyethylene terephthalate (PET), polyethylene naphthalate (PEN), polybutylene terephthalate (PBT), polycarbonate (PC), celluloses, regenerated celluloses, cellulose esters, carbon fibers, polyketones, m-aramid, p-aramid, mixtures of m-aramid and p-aramid, and polyamides selected from the group consisting of nylon-4,6 (PA 4.6), nylon-4,10 (PA 4.10), nylon-6 (PA 6), nylon-6,6 (PA 6.6 polyhexamethyleneadipamide), nylon-6,12 (PA 6.12), nylon-10,10 (PA 10.10) and nylon-12,12 (PA 12.12), and combinations thereof. Said reinforcement fibers may be formed from just one filament or from multiple filaments. Said reinforcement fibers may be in twisted or untwisted form.

Said core textile reinforcement layer (11) has a carbon nanotube coating (12) using a solution prepared by adding carbon nanotubes (CNT) to an aqueous solution containing surfactants. The surfactant used may be sodium dodecyl sulfate (SDS) or any other suitable material known in the art. The CNT solution has a CNT:water ratio between 0.5:99.5 to 5:95. The density of CNTs in said carbon nanotube coating (12) can be adjusted by the initial concentration of nanotubes in the aqueous CNT solution. Said carbon nanotube coating (12) may comprise single-walled carbon nanotubes (SWNTs), multi-walled carbon nanotubes (MWNTs) or a combination thereof. Said core textile reinforcement layer (11) is coated with a carbon nanotube coating (12) by dipping said core textile reinforcement layer (11) into said CNT solution. The conductive yarn (10) is subsequently dried at a temperature between 200-250°C. Said core textile reinforcement layer (11) may be coated with carbon nanotube coating (12) by a single dip or multiple dips into said CNT solution. If desired, said conductive yarn (10) may be subsequently washed to remove the surfactants.

It was found that conductivity increased after carbon nanotube coating (12). The electrical resistivity of the conductive yarn (10) fell from 5.0×10⁶ to less than 1 kohm per meter after carbon nanotube coating (12).

In an alternative embodiment of the invention, conductive yarn (10) further comprises a wrapped layer on said carbon nanotube coating (12). Said wrapped layer comprises polyamide fibers contiguously wound in turns around said conductive yarn (10). The wrapped layer provides insulation and prevents short circuiting when said conductive yarn (10) is used as antenna coupling (3).

Said antenna coupling (3) comprising said conductive yarn (10) is treated with a tackifying solution in order to improve the adhesion of the antenna coupling (3) to the rubber component of the tire. In a preferred embodiment of the invention, antenna coupling (3) is treated by dipping into a resorcinol formaldehyde latex (RFL) solution, as commonly used in the art. In alternative embodiments, resorcinol formaldehyde-free (RF-free) compositions, such as compositions containing acrylic resins or natural latex, can be used. In alternative embodiments, a rosin ester and/or rosin ester tackifier may be added to the dipping solution. Solutions may be water-based or organic solved based. Organic solvents are chosen from a group containing toluene, hydrocarbon solvents, xylene, ethyl acetate, alcohols, ethers, and mixtures thereof. The antenna coupling (3) coated by the tackifying solution is then dried at 200-200°C. However, the skilled person can appreciate that any method known in the art for improving the adhesion of components to rubber may be used in this application such that the antenna coupling (3) remains intact and adhered to or within the tire throughout the lifetime of the tire. After treatment, said antenna coupling (3) is attached to the electrical device (1).

In the case wherein said conductive yarn (10) does not comprise a wrapped polyamide layer, said core textile reinforcement layer (11) may be coated with carbon nanotube coating (12) and treated with a tackifying solution in a single step or in two consecutive steps. In the case wherein said conductive yarn (10) comprises a wrapped polyamide layer, said core textile reinforcement layer (11) is coated with carbon nanotube coating (12), covered with a wrapped polyamide layer, and treated with a tackifying solution in separate steps. The conductive yarn (10) is subsequently dried at a temperature between 200-250°C.

The amount of CNT in the antenna coupling (3) is 1-10% by weight. The conductivity of said conductive yarn (10) increases with the % weight of CNT therein.

The electrical device (1) can be mounted directly onto uncured rubber of a tire before the curing process so that it is embedded among the layers comprising the final tire product. The tire types which can be equipped with the electrical device (1) include but are not limited to, bias tires, belted bias tires, radial tires, solid tires, semi-pneumatic tires, pneumatic tires, and airless tires. Generally, all tires include an outer tread, a bead which contacts a rim upon installation of the tire, and sidewalls that extend between the tread and bead. The present invention is advantageous in that it allows exact positioning of the electrical device (1) on the desired location and in a desired alignment on the tire without overhandling the electrical device (1) and causing damage.

It is most advantageous to place the electrical device (1) in positions on the tire that have minimum tensile and compressive strains during driving conditions. Preferably, the electrical device (1) is mounted between the carcass layer and the outer rubber layer at upper, middle, or lower sidewall area in the circumferential direction of the tire. Good readability of the tag is obtained in these positions due to the thin gauge and the distance from the metallic components of the tire. In another embodiment of the invention, the electrical device (1) is mounted onto the bead area of the tire, including the apex rubber and bead ring. The electrical device (1) may be mounted on the apex rubber or in the apex rubber in cases where the apex rubber is composed of two or more parts. These positions are advantageous due to reduced deformation in horizontal direction in driving conditions. In another embodiment of the invention, the electrical device (1) is mounted between the apex rubber and bead ring apex, wherein the electrical device (1) is mounted first on the upper side of the rubberized bead ring and the apex rubber is mounted onto the bead ring and the tag (1) This position is advantageous due to reduced deformation in all directions during driving conditions.

After the electrical device (1) is mounted onto the uncured rubber, other elements of the tire, such as tire cords, are added onto the uncured rubber, and tire is cured in order to get the final tire product having an electrical device (1), such as an RFID transponder. Thereafter, the tire can be identified by the use of an RFID reader, which allows for tracking the tire in a manufacturing or production system, monitoring the location of the tire, and performing inventory operations. A single tire may include one or several electrical devices (1) described herein. For example, if it is desired to monitor physical parameters at different locations in the tire or to monitor different parameters.

The location for the device partially depends on its function.

The skilled person can appreciate that the electrical device (1) of the present invention can be used with other rubber or rubber-based articles in addition to tires. Other rubber-based articles include, but are not limited to, suspension components, cushions, shoe soles, hoses, hockey pucks, conveyor belts, musical mouth pieces and bowling balls.

In a nutshell, the present invention proposes an electronic device (1) comprising a chip and a first antenna and an antenna coupling (3) aligned to form an electromagnetic coupling between the first antenna and the antenna coupling (3), wherein said antenna coupling (3) comprises a conductive yarn (10) comprising a core textile reinforcement layer (11) coated with a carbon nanotube coating (12).

In one variation of the present invention, said core textile reinforcement layer (11) comprises at least one reinforcement fiber chosen from a group containing cotton, polyester (HMLS), UHMWPE (ultra-high molecular weight polyethylene), polyethylene terephthalate (PET), polyethylene naphthalate (PEN), polybutylene terephthalate (PBT), polycarbonate (PC), celluloses, regenerated celluloses, cellulose esters, carbon fibers, polyketones, m-aramid, p-aramid, mixtures of m-aramid and p-aramid, and polyamides selected from the group consisting of nylon-4,6 (PA 4.6), nylon-4,10 (PA 4.10), nylon-6 (PA 6), nylon-6,6 (PA 6.6 polyhexamethyleneadipamide), nylon-6,12 (PA 6.12), nylon-10,10 (PA 10.10) and nylon-12,12 (PA 12.12), and combinations thereof.

In a further variation of the present invention, said carbon nanotube coating (12) is obtainable by coating said core textile reinforcement layer (11) using an aqueous solution of carbon nanotubes wherein said solution has a carbon nanotube:water ratio between 0.5:99.5 to 5:95.

In a further variation of the present invention, said conductive yarn (10) further comprises a layer of polyamide fibers contiguously wound in turns around said carbon nanotube coating (12) of said conductive yarn (10).

In a further variation of the present invention, the amount of carbon nanotubes in said antenna coupling (3) is between 1% to 10% by weight.

In a further variation of the present invention, wherein said antenna coupling (3) is coated with a tackifying solution.

In a further variation of the present invention, tackifying solution contains at least one material selected from the group comprised of resorcinol formaldehyde latex solution, acrylic resin solution, rosin ester solution, natural latex solution, and combinations thereof.

In a further variation of the present invention, said antenna coupling (3) is in the form of a coil-shaped spring antenna, helical antenna, plate-shaped antenna, or rod-shaped antenna.

The present invention further proposes a radio-frequency identification tag comprising an electronic device (1), said electronic device (1) further comprising a package (7) wherein said chip and an antenna are integrated and wherein said package forms a bobbin (2) on its outer surface, on which said antenna coupling (3) having at least one coil winding is arranged.

The present invention further proposes a tire having an electronic device (1).

## Claims

1. An electronic device (1) comprising a chip and a first antenna and an antenna coupling (3) aligned to form an electromagnetic coupling between the first antenna and the antenna coupling (3), wherein said antenna coupling (3) comprises a conductive yarn (10) comprising a core textile reinforcement layer (11) with a carbon nanotube coating (12).

2. An electronic device (1) as described in Claim 1, said core textile reinforcement layer (11) comprises at least one reinforcement fiber chosen from a group containing cotton, polyester (HMLS), UHMWPE (ultra-high molecular weight polyethylene), polyethylene terephthalate (PET), polyethylene naphthalate (PEN), polybutylene terephthalate (PBT), polycarbonate (PC), celluloses, regenerated celluloses, cellulose esters, carbon fibers, polyketones, m-aramid, p-aramid, mixtures of m-aramid and p-aramid, and polyamides selected from the group consisting of nylon-4,6 (PA 4.6), nylon-4,10 (PA 4.10), nylon-6 (PA 6), nylon-6,6 (PA 6.6 polyhexamethyleneadipamide), nylon-6,12 (PA 6.12), nylon-10,10 (PA 10.10) and nylon-12,12 (PA 12.12), and combinations thereof.

3. An electronic device (1) as described in Claim 1, wherein said carbon nanotube coating (12) is obtainable by coating said core textile reinforcement layer (11) using an aqueous solution of carbon nanotubes wherein said solution has a carbon nanotube:water ratio between 0.5:99.5 to 5:95.

4. An electronic device (1) as described in any preceding Claim, wherein said conductive yarn (10) further comprises a layer of polyamide fibers contiguously wound in turns around said carbon nanotube coating (12) of said conductive yarn (10).

5. An electronic device (1) as described in any preceding Claim, wherein the amount of carbon nanotubes in said antenna coupling (3) is between 1% to 10% by weight.

6. An electronic device (1) as described in any preceding Claim, wherein said antenna coupling (3) is coated with a tackifying solution.

7. An electronic device (1) as described in Claim 6, wherein said tackifying solution contains at least one material selected from the group comprised of resorcinol formaldehyde latex solution, acrylic resin solution, rosin ester solution, natural latex solution, and combinations thereof.

8. An electronic device (1) as described in any preceding Claim, wherein said antenna coupling (3) is in the form of a coil-shaped spring antenna, helical antenna, plate-shaped antenna, or rod-shaped antenna.

9. A radio-frequency identification tag comprising an electronic device (1) as described in any one of Claims 1 to 8, said electronic device (1) further comprising a package (7) wherein said chip and an antenna are integrated and wherein said package forms a bobbin (2) on its outer surface, on which said antenna coupling (3) having at least one coil winding is arranged.

10. A tire having an electronic device (1) as described in any one of Claims 1 to 8.
